# EUROPÄISCHE PATENTSCHRIFT

(11) **EP 3 175 751 B1**
(45) Veröffentlichungstag und Bekanntmachung des Hinweises auf die Patenterteilung: **30.08.2023**
(21) Anmeldenummer: 16201997.0
(22) Anmeldetag: 02.12.2016
(51) Int. Cl.: A47J 36/02, A47J 27/00

(54) **WÄRMELEITPLATTE UND DAMIT GEBILDETES KOCHGEFÄSS**
HEAT CONDUCTION PLATE AND COOKING VESSEL WITH SAME
PLAQUE CONDUCTRICE DE CHALEUR ET RÉCIPIENT DE CUISSON LA COMPRENANT

(30) Priorität: 03.12.2015 DE 102015015545
(43) Veröffentlichungstag der Anmeldung: 07.06.2017
(73) Patentinhaber: ACS Coating Systems GmbH, 26386 Wilhelmshaven (DE)
(72) Erfinder: Stecher, Christoph, 26386 Wilhelmshaven (DE)
(74) Vertreter: Philipp, Matthias

(56) Entgegenhaltungen:
- EP-A2- 0 175 462
- WO-A1-87/04911
- WO-A1-2012/153317
- CH-A- 96 637
- CN-A- 101 438 932
- US-A- 2 517 584
- US-A- 4 880 951
- US-A- 5 532 461

## Beschreibung

### GEBIET

Die vorliegende Erfindung betrifft eine Wärmeleitplatte und ein damit gebildetes Kochgefäß, insbesondere in Form einer Pfanne.

### HINTERGRUND

Kochgefäße werden zum Erwärmen von Speisen typischerweise auf einer Kochstelle platziert, die den Boden des Kochgefäßes erhitzt. Dabei kann es vorkommen, dass sich der Boden des Kochgefäßes verzieht. Durch den Verzug kann der Boden des Kochgefäßes uneben werden, wodurch sich die Auflageeigenschaften und in Folge dessen die Standsicherheit des Kochgefäßes und auch die Wärmeübertragung zwischen Kochstelle und Boden verschlechtern. Dadurch wird einerseits die Wärmeverteilung innerhalb des Bodens uneinheitlich und andererseits die benötigte Energieaufnahme vergrößert. Somit wird sowohl die Funktion beeinträchtigt als auch der ökologische Fingerabdruck.

Abhilfe kann nach dem Stand der Technik dadurch geschaffen werden, dass der Boden entsprechend dick ausgeführt wird, was einerseits eine größere mechanische Stabilität bewirkt und andererseits eine größere Wärmeleitung in horizontaler Richtung. Meistens wird dazu Aluminium als Werkstoff gewählt, um ein möglichst gutes Verhältnis zwischen Bodendicke, Wärmeleitung und Gewicht zu erzielen. Kupfer ist unter diesen Parametern noch besser geeignet, aber wesentlich teurer. Stabile Pfannenböden haben in diesem Fall eine Dicke zwischen 5 und 10 mm.

Erschwert wird die Situation ferner durch die erwünschte Eignung für Induktionskochfelder, die einen Boden mit ferromagnetischen Eigenschaften benötigen. Die erforderliche Anbringung mindestens einer ferritischen Blechlage bewirkt zusätzliche Bodenbewegungen, zum Beispiel durch den Bimetalleffekt. Pfannen mit guten Eigenschaften bzgl. der Stabilität unter Wärmeeintrag und mit guter Wärmeverteilung innerhalb des Nutzbereiches sind daher schwer und in der Aufheizgeschwindigkeit langsam, da eine vergleichsweise große träge Masse erwärmt werden muss. Umgekehrt ist die große Wärmekapazität einer schweren Pfanne wiederum schlecht, wenn die Arbeitstemperatur nach unten verändert werden soll. Sämtliche Regelvorgänge sind in diesem Falle langsam.

Andere übliche Konstruktionen haben bei Raumtemperatur einen nur kleinen Einzug, der dann bei Erwärmung zunimmt, beispielsweise auf Werte über 1 mm, teilweise auf mehr als 2 oder gar 3 mm. Mit der Zunahme des Einzugs werden diese Bauarten zwar nicht unstabil bzgl. der Auflage, aber der Wirkungsgrad und die Wärmeverteilung werden mit zunehmendem Einzug schlechter. Im ungünstigsten Fall kann hierbei auftreten, dass die Induktionswärmequelle abschaltet, weil der Abstand des Bodens in der Mitte zu groß ist, was dazu führt, dass das Kochgeschirr nicht nutzbar ist. WO87/04911A1 offenbart ein Kochgefäß.

Ein Aspekt der Erfindung ist eine kreisrunde, ovale oder mehreckige Wärmeleitplatte aus Metall, die beispielsweise als Zwischenlage zwischen einer Beheizungsvorrichtung, beispielsweise einem Induktions- oder sonstigen Herd, und einem Kochgefäß verwendet werden kann, um Wärme optimal zwischen der Beheizungsvorrichtung und dem Kochgefäß zu übertragen, ohne dass ein unmittelbarer Kontakt zwischen dem Kochgefäß und der Beheizungsvorrichtung besteht. In einem solchen Fall soll sich die Wärmeleitplatte bei Erwärmung nicht verziehen, damit das Kochgefäß in erhitztem Zustand von Wärmeleitplatte und Kochgefäßboden möglichst vollflächig an einer Oberseite der Wärmeleitplatte aufliegt und die Wärmeleitplatte mit ihrer Unterseite möglichst vollflächig auf der Beheizungsvorrichtung aufliegt.

### ZUSAMMENFASSUNG

Die Aufgabe der vorliegenden Erfindung besteht zunächst darin, eine Wärmeleitplatte bereitzustellen, die nicht eben ist, sondern so geformt oder vorverformt ist, dass in erhitztem Zustand gute Auflageeigenschaften auf einer ebenen Beheizungsvorrichtung und gute Wärmeübertragungseigenschaften erzielt werden.

Diese Aufgabe wird erfindungsgemäß durch eine Wärmeleitplatte nach Anspruch 1 gelöst.

Bevorzugte Ausgestaltungen sind in den abhängigen Ansprüchen beschrieben.

Weiterhin ist es Aufgabe der vorliegenden Erfindung, ein Kochgefäß bereitzustellen, dessen Boden so geformt ist, dass in erhitztem Zustand gute Auflage- und Wärmeübertragungseigenschaften erzielt werden. Durch eine verbesserte Formgebung soll erreicht werden, dass das Kochgefäß besonders leicht ist, eine geringe Wärmekapazität hat, schnelle Reaktionszeiten aufweist und gleichzeitig eine gute Wärmeverteilung hat und bei allen Gebrauchstemperaturen stabil auf der Unterlage steht, ohne zu kippeln.

Diese Aufgabe wird erfindungsgemäß durch ein Kochgefäß nach Anspruch 15 gelöst.

Das erfindungsgemäße Kochgefäß umfasst einen Boden, der insbesondere durch eine Wärmeleitplatte nach der Erfindung gebildet ist und kreisrund, oval oder mehreckig sein kann, mit einem nach oben (weg von der Kochstelle) abgehenden, umlaufenden Rand. Der Boden weist einen ersten ringförmigen Bereich, der mit einer Unterseite in einer Auflageebene verläuft und der dazu eingerichtet ist, im Betrieb auf einer ebenen Kochstelle, auf der das Kochgefäß platziert ist, aufzuliegen, einen zweiten ringartigen, kegelstumpf- oder pyramidenstumpfmantelförmigen Bereich, der von dem ersten kreisringförmigen, ebenen Bereich umschlossen ist und in Richtung einer Gefäßmitte mit einer ersten Steigung ansteigt und einen dritten Bereich, der kreisförmig sein kann und von dem zweiten kegel- oder pyramidenstumpfmantelförmigen Bereich umschlossen ist und dessen Steigung in Richtung der Gefäßmitte an jeder Stelle geringer ist als die erste Steigung, auf. Der erste, zweite und dritte Bereich weisen eine konstante Dicke auf.

Die Form des Bodens kann durch Prägen erzeugt sein.

Durch den beschriebenen, zwischen dem ersten und dritten Bereich näherungsweise S-förmigen Verlauf der Querschnittskontur des Bodens wird erreicht, dass beim Erhitzen des Bodens ein erwünschter und reproduzierbarer Verzug eintritt. Es hat sich insbesondere gezeigt, dass sich bei einer erfindungsgemäßen Wärmeleitplatte oder einem erfindungsgemäßen Kochgefäß zumindest ein Teilbereich des dritten ringförmigen Bereichs, etwa ein innerster kreisrunder Bereich, bei Erhitzen des Bodens geringfügig nach unten bewegt, so dass die Wärmeübertragung zwischen Kochstelle und Boden verbessert wird. Insbesondere wurde festgestellt, dass bei einem Abstand bzw. Vertikalabstand des dritten Bereichs der erfindungsgemäßen Geometrie außen, also am Übergang vom zweiten zum dritten Bereich, von der tiefsten Stelle/Auflagefläche von 0,2 bis 0,7 mm oder 0,8 mm eine Bodenbewegung in der Größenordnung von 0,2 bis 0,4 mm nach unten, zur Wärmequelle hin erfolgt und bei weiterer Erwärmung kein weiterer Verzug auftritt, die Form des Bodens also stabil bleibt. Damit hat die erfindungsgemäße Geometrie bei einer bevorzugten Anwendungstemperatur zwischen 150 °C und 250 °C einen nur minimalen Einzug/Abstand von der Bodenplatte von 0,0 bis 0,4 mm, besser 0,1 bis 0,2 mm, so dass ein optimaler Wärmeübergang bei gleichzeitig stabilem Stand gewährleistet wird.

Ferner wurde gemessen, dass bei einem Vertikalabstand bei Raumtemperatur (z. B. 20°C bis 25°C) von 0,8 mm dieser Abstand bei Erwärmung stabil ist und sich nicht verändert, wogegen bei einem Abstand von 0,9 mm und mehr dieser sich mit zunehmender Temperatur vergrößert. Im Hinblick auf die gestellte Aufgabe ist also ein Einzug zwischen 0,2 mm und 0,7 mm oder max. 0,8 mm in Verbindung mit der erfindungsgemäßen Querschnittkontur sehr gut geeignet. Der beste Wirkungsgrad ergibt sich bei einem kleinsten Abstand, wobei der Abstand im Gebrauch nie negativ werden darf. Messungen haben gezeigt, dass eine Verringerung des Abstands bei Raumtemperatur von 0,4 mm auf 0,3 mm praktisch keinen weiteren Vorteil erbringt, die Gefahr von Kippeln im Fall von unsachgemäßem Überhitzen aber zunimmt, so dass ein Einzug unter Serienbedingungen von 0,4 - 0,5 mm oder 0,6 mm als besonders vorteilhaft anzusehen ist.

Insbesondere kann der dritte Bereich in Richtung der Gefäßmitte zunächst parallel zu der Auflageebene oder horizontal verlaufen,

Alternativ kann der dritte Bereich zunächst in Richtung der Gefäßmitte ansteigen.

Als weitere Alternative kann der dritte kreisförmige Bereich in Richtung der Gefäßmitte zunächst abfallen.

Das Kochgefäß kann insbesondere ein Induktions-Kochgefäß sein.

Erfindungsgemäß umfasst der Boden des Kochgefäßes mehrere Metallschichten, wobei eine der Metallschichten Aluminium umfasst. Die Metallschichten umfassen zwei Stahlschichten, die die Aluminium enthaltende Schicht umschließen.

Durch den gezielten thermischen Verzug aufgrund der erfindungsgemäßen Ausgestaltung des Kochgefäßes können die Metallschichten dünn gehalten werden, was den Herstellungsaufwand und das Gewicht des Kochgefäßes reduziert. Insbesondere müssen die Stahlschichten nicht dicker als 0,7, 0,6, 0,5 oder 0,4 mm und die Aluminium enthaltende Schicht nicht dicker als 2,5, 2,0, 1,5 oder 1,4 mm sein. Die Metallschichten müssen ferner nicht gleich dick sein und können unterschiedliche Dicken aufweisen.

Vorzugsweise umfasst eine der Metallschichten ein ferromagnetisches Material, welches eine Curie-Temperatur zwischen 200°C und 300°C aufweist. Ferner kann der Boden eine Si-haltige Beschichtung aufweisen, insbesondere eine schwarze Beschichtung. Gut geeignet sind Si-haltige Keramiken, Si-Harze, Silane, Silixane, Polysiloxane usw., die eine Temperaturbeständigkeit von mindestens 400°C aufweisen können, besser von mindestens 450°C oder 500°C. Vorteilhaft ist es ferner, wenn diese Bodenbeschichtung spülmaschinenfest ist und einen Antihafteffekt aufweist. Vorteilhaft ist weiterhin eine Antihaftbeschichtung im inneren Bereich und an den Außenwänden, die entweder auch keramisch oder im Wesentlichen aus temperaturbeständigen Polymeren, insbesondere PAEK, PPS, PES, PAI, PI, PEI, PTFE, PFA, etc. und Mischungen daraus einschichtig oder mehrschichtig zusammengesetzt sein kann. Eine Kalibrierung der Bodenkontur nach der Beschichtung und dem erforderlichen Einbrand ist vorteilhaft, wobei der Einzug durch Prägen vergrößert oder verkleinert werden kann, um das gewünschte oben beschriebene Maß zu erreichen.

Versuche haben ferner gezeigt, dass die erfindungsgemäße Geometrie auch mit reinem ferritischen Stahlblech in Dicken zwischen 1,0 und 3 mm vorteilhaft funktioniert, und auch mit Aluminiumblech in Dicken zwischen 2 und 4 mm. Letztere Lösung ist allerdings nicht induktionsgeeignet.

Durch die erfindungsgemäße Ausgestaltung kann der Verzug ferner so gesteuert bzw. so weit verringert werden, dass standfeste Kochgefäße erzeugt werden können, bei denen kein Punkt einer Unterseite innerhalb des kreisringförmigen ersten Bereichs befindlichen Bodens bei einer Temperatur des Kochgefäßes von mehr als 100°C, 150°C oder 200°C oder auch 250°C in vertikaler Richtung um mehr als 1 mm, 0,5 mm oder 0,3 mm oder 0,1mm von der Auflageebene beabstandet ist.

Vergleichende Versuche haben insbesondere gezeigt, dass Kochgefäße mit der erfindungsgemäßen Bodengeometrie und dem beschriebenen Mehrschichtmaterial (0,4 mm dicke Stahlschicht, 1,8 mm dicke Aluminiumschicht, 0,4 mm dicke Stahlschicht) mit einer schwarzen Bodenbeschichtung im Aufheizverhalten bis 200 °C um den Faktor 2-3 schneller sind als herkömmliche Vergleichspfannen bei entsprechend niedrigerem Energieverbrauch auf allen Herdarten.

Es kann vorgesehen sein, dass der erste ringförmige Bereich von einer ringförmigen Sicke umschlossen ist. Die Sicke ist bevorzugt in Richtung eines Innenraums des Kochgefäßes ausgeformt, d.h. von der Auflageebene weg. Die Sicke kann rechteckigen, trapezförmigen oder dreieckigen Querschnitt besitzen.

Alternativ oder zusätzlich zu einer Sicke kann vorgesehen sein, dass der erste ringförmige Bereich von einer ringförmigen bodenseitigen Aussparung umschlossen ist. Die Aussparung kann beispielsweise einen rechteckigen, trapezförmigen oder dreieckigen Querschnitt aufweisen.

### KURZBESCHREIBUNG DER ZEICHNUNGEN

Im Folgenden wird die Erfindung unter Bezugnahme auf die beigefügten Zeichnungen erläutert, in denen:
Fig. 1 einen Querschnitt einer ersten bevorzugten Ausführungsform eines erfindungsgemäßen Kochgefäßes zeigt;
Fig. 2 einen Querschnitt einer zweiten bevorzugten Ausführungsform des erfindungsgemäßen Kochgefäßes zeigt;
Fig. 3 einen Querschnitt einer dritten bevorzugten Ausführungsform des erfindungsgemäßen Kochgefäßes zeigt;
Fig. 4 einen Querschnitt einer vierten bevorzugten Ausführungsform eines nicht erfindungsgemäßen Kochgefäßes zeigt;
Fig. 5 einen Querschnitt einer fünften bevorzugten Ausführungsform eines nicht erfindungsgemäßen Kochgefäßes zeigt;
Fig. 6 einen Querschnitt einer sechsten bevorzugten Ausführungsform eines nicht erfindungsgemäßen Kochgefäßes zeigt;
Fig. 7 einen Querschnitt einer siebten bevorzugten Ausführungsform des erfindungsgemäßen Kochgefäßes zeigt;
Fig. 8 einen Querschnitt einer achten bevorzugten Ausführungsform des erfindungsgemäßen Kochgefäßes zeigt; und
Fig. 9 einen Querschnitt einer Wärmeleitplatte zeigt.

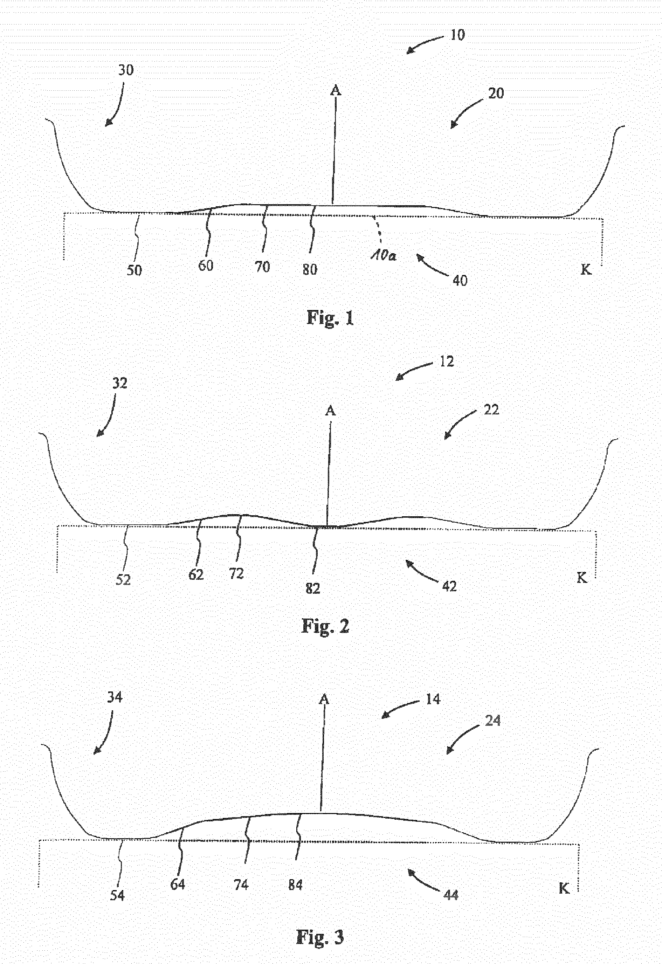

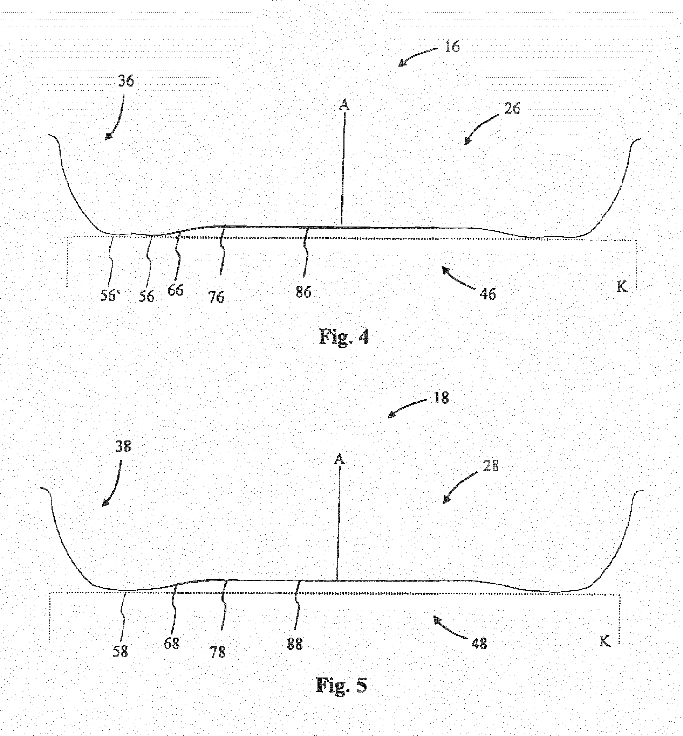

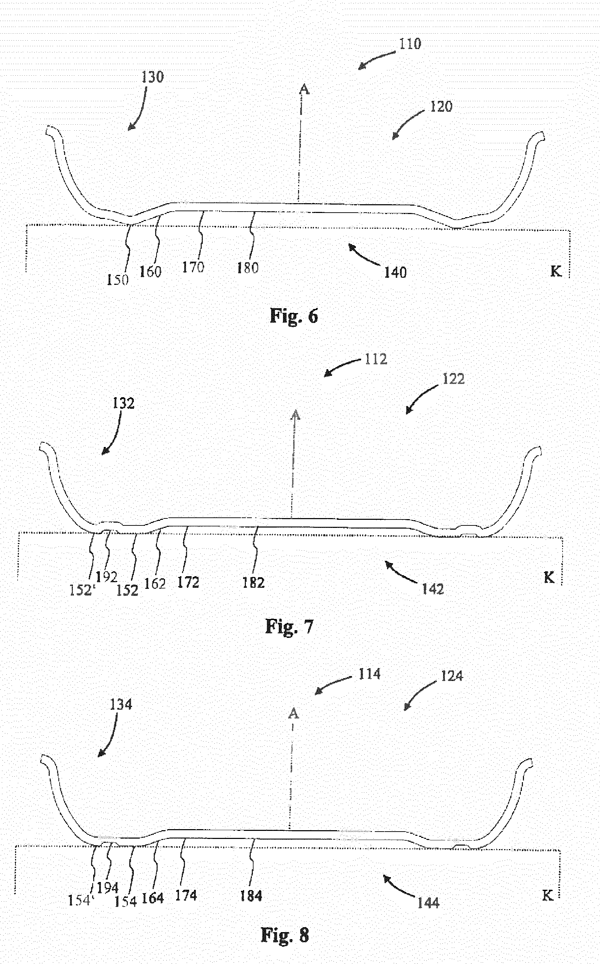

Fig. 1 bis 8 zeigen Querschnitte von bevorzugten (zu einer vertikalen Achse A rotationssymmetrischen) Ausführungsformen 10, 12, 14, 112, 114 des erfindungsgemäßen Kochgefäßes. Das Kochgefäß umfasst eine erfindungsgemäße Wärmeleitplatte als Boden 20, 22, 24, 26, 28, 120, 122, 124 und einen nach oben abgehenden, umlaufenden Rand 30, 32, 34, 36, 38, 130, 132, 134. Der Boden 20, 22, 24, 26, 28, 120, 122, 124 weist eine Unterseite 40, 42, 44, 46, 48, 140, 142, 144 auf, mit einem ersten kreisringförmigen Bereich 50, 52, 54, 56, 58, 150, 152, 154, der in einer Auflageebene 10a verläuft und dazu eingerichtet ist, im Betrieb auf einer ebenen Beheizungsvorrichtung K, auf der das Kochgefäß platziert ist, aufzuliegen. In den erfindungsgemäßen Ausführungsformen 10, 12, 14, 112, 114 ist der erste kreisringförmige Bereich 50, 52, 54, 152, 154 als ebene Fläche ausgebildet, während der erste ringförmige Bereich 56, 58, 150 in den nicht erfimndungsgemäßen Ausführungsformen 16, 18, 110 eine im Wesentlichen linienförmige Auflagefläche bildet.

Ferner umfassen die Ausführungsformen 16, 112, 114 einen vierten kreisringförmigen Bereich 56', 152', 154', der den ersten kreisringförmigen Bereich 56, 152, 154 umschließt und ebenfalls dazu eingerichtet ist, im Betrieb auf der ebenen Beheizungsvorrichtung K, auf der das Kochgefäß platziert ist, aufzuliegen. Zwischen dem vierten kreisringförmigen Bereich 56', 152', 154', der den ersten kreisringförmigen Bereich 56, 152, 154 ist in den Ausführungsformen 16, 112 eine kreisringförmige Sicke 192 eingeprägt, während bei der Ausführungsform 114 auflageflächenseitig eine kreisringförmige Aussparung 194 vorgesehen ist, die bevorzugt geprägt ist. Der Rand 30, 32, 34, 36, 38, 132, 134, welcher sich an den ersten kreisringförmigen Bereich 50, 52, 54, 58 bzw. den vierten kreisringförmigen Bereich 56', 152', 154' anschließt, ist auflagenseitig konvex ausgebildet und schließt mit einem auflagenseitig konkav ausgebildeten Abschluss ab, während der Rand 130, welcher sich an den ersten kreisringförmigen Bereich 150 anschließt, kegelstumpfförmig und daran anschließend konvex ausgebildet ist und mit einem auflagenseitig konkav ausgebildeten Abschluss abschließt.

Die Unterseite 40, 42, 44, 46, 48 140, 142, 144 des Bodens 20, 22, 24, 26, 28, 120, 122, 124 weist ferner einen zweiten kreisringartigen kegelstumpfmantelförmigen Bereich 60, 62, 64, 66, 68, 160, 162, 164 auf, der von dem ersten kreisringförmigen Bereich 50, 52, 54, 56, 58, 150, 152, 154 umschlossen ist und in Richtung Gefäßmitte (d. h. in Richtung der Achse A) mit einer ersten Steigung ansteigt. Die erste Steigung des zweiten Bereichs 60, 62, 64, 66, 68, 160, 162, 164 kann z. B. mindestens 5°, 10°, 15°, 20° oder 30° betragen.

Des Weiteren weist die Unterseite 40, 42, 44, 46, 48, 140, 142, 144 des Bodens 20, 22, 24, 26, 28, 120, 122, 124 einen dritten kreisförmigen Bereich 70, 72, 74, 76, 78, 170, 172, 174 auf, der von dem zweiten kegelstumpfmantelförmigen Bereich 60, 62, 64, 66, 68, 160, 162, 164 umschlossen ist und dessen Steigung an jeder Stelle geringer ist als die erste Steigung des zweiten kegelstumpfmantelförmigen Bereichs 60, 62, 64, 66, 68, 160, 162, 164. Der dritte kreisförmige Bereich 70, 72, 74, 76, 78, 170, 172, 174 kann in Richtung Gefäßmitte horizontal verlaufen, wie beispielsweise bei den Ausführungsformen 10, 12, 16, 18, 110, 112, 114 oder ansteigen oder abfallen, wie bei den Ausführungsformen 12, 14 gezeigt. Ferner umfasst der dritte kreisförmige Bereich 70, 72, 74, 76, 78, 170, 172, 174 einen kreisrunden innersten Bereich 80, 82, 84, 86, 88, 180, 182, 184. Der innerste Bereich 80, 86, 88, 180, 182, 184 der Ausführungsformen 10, 16, 18, 110, 112, 114 ist eben ausgeführt, während der innerste Bereich 82, 84 der Ausführungsformen 12, 14 nach unten bzw. nach oben gewölbt ist.

Die Kontur der Unterseite 40, 42, 44, 46, 48, 140, 142, 144 des Bodens 20, 22, 24, 26, 28, 120, 122, 124 kann durch Prägen geformt werden. Ferner kann die Unterseite 40, 42, 44, 46, 48, 140, 142, 144 mit einer Si-haltigen Beschichtung beschichtet sein.

Ein Außendurchmesser der erfindungsgemäßen Wärmeleitplatte oder des erfindungsgemäßen Kochgefäßes kann 200 mm - 220 mm, 220 mm - 240 mm, 240 mm - 260 mm, 260 mm - 280 mm, 280 mm - 300 mm, 300 mm - 320 mm, 320 mm - 340 mm, 340 mm - 360 mm, 360 mm - 380 mm oder 380 mm - 400 mm betragen. Des Weiteren kann der Außendurchmesser kleiner als 200 mm oder größer als 400 mm sein. Der Durchmesser des ersten ringförmigen Bereichs kann zwischen 70 % - 85 % des Außendurchmessers betragen. Der erste ringförmige Bereich kann eine radiale Breite von mehr als 2 %, 3 %, 4 %, 5 %, 10 %, 15 %. 20 % oder 25 % des Außendurchmessers aufweisen. Der zweite ringartige, kegelstumpfmantelförmige Bereich kann eine radiale Breite von 1% - 35 %, vorzugsweise 5% - 20 % und besonders vorzugsweise 10 % - 15 % des Außendurchmessers aufweisen. Der dritte Bereich kann einen Durchmesser von mehr als 15 %, vorzugsweise mehr als 30% und besonders vorzugsweise mehr als 50 % des Außendurchmessers aufweisen. Die Übergänge zwischen den Bereichen können verrundet sein, beispielsweise mit Übergängen von ca. 10 mm Breite.

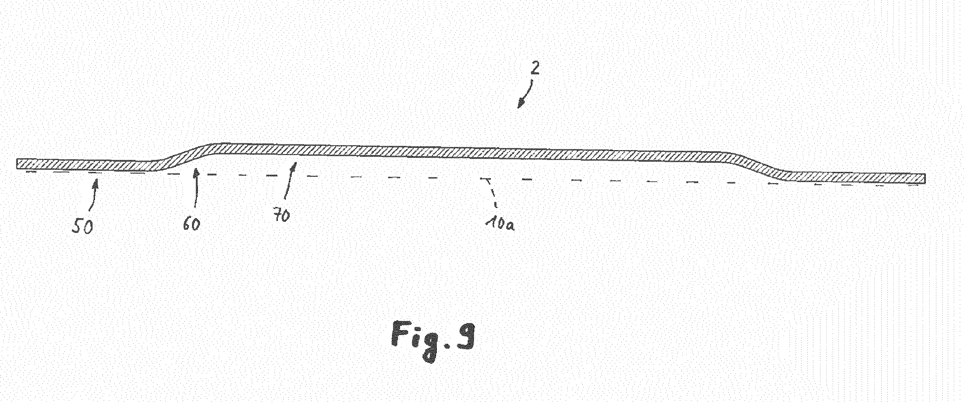

Figur 9 zeigt eine Querschnittsansicht einer erfindungsgemäßen Wärmeleitplatte 2, die kreisrund, oval oder mehreckig sein kann, mit einem ersten ringförmigen Bereich 50, dessen Unterseite in einer Auflageebene 10a verläuft. Der erste ringförmige Bereich 50 umschließt einen zweiten, ringartigen, kegel- oder pyramidenstumpfmantelförmigen Bereich 60, der in Richtung einer Mitte mit einer ersten Steigung ansteigt, und einen dritten Bereich 70, der parallel zur Auflagebene 10a verläuft. Die Wärmeleitplatte kann dazu verwendet werden, als Zwischenlage zwischen einer Beheizungsvorrichtung mit ebener Oberfläche und einem Kochgefäß verwendet zu werden, um eine optimale Wärmeübertragung zu gewährleisten. Die Wärmeleitplatte ist erfindungsgemäß so ausgelegt, dass sie sich im erhitzten Zustand verformt und im Wesentlichen vollflächig auf der Beheizungsvorrichtung aufliegt.

Der vorstehend beschriebene Boden eines Kochgefäßes ist bevorzugt durch eine Wärmeleitplatte 2 gebildet, wie sie in Figur 9 beispielhaft dargestellt ist.

## Patentansprüche

1. Wärmeleitplatte (2), bestehend aus mehreren Metallschichten, wobei zwei Stahlschichten beiderseits einer Aluminium enthaltenden Schicht angeordnet sind, umfassend einen ersten ringförmigen Bereich (50, 52, 54, 56, 58, 150, 152, 154), der eine ebene Fläche bildet, mit einer Unterseite in einer Auflageebene verläuft und dazu eingerichtet ist, im Betrieb auf einer Beheizungsvorrichtung (K) aufzuliegen;
einen zweiten ringartigen, kegel- oder pyramidenstumpfmantelförmigen Bereich (60, 62, 64, 66, 68, 160, 162, 164), der von dem ersten ringförmigen Bereich (50, 52, 54, 56, 58, 150, 152, 154) umschlossen ist und in Richtung einer Mitte mit einer ersten Steigung ansteigt; und
einen dritten Bereich (70, 72, 74, 76, 78, 170, 172, 174), der von dem zweiten kegeloder pyramidenstumpfmantelförmigen Bereich (60, 62, 64, 66, 68, 160, 162, 164) umschlossen ist und dessen Steigung in Richtung einer Gefäßmitte an jeder Stelle geringer ist als die erste Steigung;
**dadurch gekennzeichnet, dass** der erste, zweite und dritte Bereich eine konstante Dicke aufweisen, und dass ein Abstand des dritten Bereichs am Übergang zu dem zweiten ringartigen Bereich von der Auflageebene bei Raumtemperatur zwischen 0,2 mm und 0,8 mm beträgt.

2. Wärmeleitplatte nach Anspruch 1, **dadurch gekennzeichnet, dass** der dritte Bereich (70, 72, 76, 78, 170, 172, 174) in Richtung der Mitte anschließend an den zweiten kegel- oder pyramidenstumpfmantelförmigen Bereich (60, 62, 64, 66, 68, 160, 162, 164) parallel zur Auflageebene verläuft.

3. Wärmeleitplatte nach Anspruch 1, **dadurch gekennzeichnet, dass** der dritte Bereich (74) in Richtung der Mitte anschließend an den zweiten kegel- oder pyramidenstumpfmantelförmigen Bereich (64) ansteigt.

4. Wärmeleitplatte nach Anspruch 1, **dadurch gekennzeichnet, dass** der dritte Bereich in Richtung der Mitte anschließend an den zweiten kegel- oder pyramidenstumpfmantelförmigen Bereich abfällt.

5. Wärmeleitplatte nach einem der Ansprüche 2 bis 4, **dadurch gekennzeichnet, dass** der dritte Bereich (70, 76, 78, 170, 172, 174) einen innersten Bereich (80) aufweist, der eben ist.

6. Wärmeleitplatte nach einem der Ansprüche 2 bis 4, **dadurch gekennzeichnet, dass** der dritte Bereich (74) einen innersten Bereich (84) umschließt, der nach oben gewölbt ist.

7. Wärmeleitplatte nach einem der Ansprüche 2 bis 4, **dadurch gekennzeichnet, dass** der dritte Bereich (72) einen innersten Bereich (82) aufweist, der nach unten gewölbt ist.

8. Wärmeleitplatte nach einem der vorangehenden Ansprüche, **dadurch gekennzeichnet, dass** die Stahlschichten nicht dicker als 0,7 mm, 0,6 mm, 0,5 mm oder 0,4 mm sind und die Aluminium enthaltende Schicht nicht dicker als 2,5, 2,0, 1,5 oder 1,4 mm ist.

9. Wärmeleitplatte nach einem der vorhergehenden Ansprüche, **gekennzeichnet durch** mehrere Metallschichten, wobei eine der Metallschichten ein ferromagnetisches Material umfasst, welches eine Curie-Temperatur zwischen 200°C und 300°C aufweist.

10. Wärmeleitplatte nach einem der vorhergehenden Ansprüche, **dadurch gekennzeichnet, dass** eine Unterseite der Wärmeleitplatte eine Si-haltige Beschichtung aufweist.

11. Wärmeleitplatte nach einem der Ansprüche 5, 6 oder 7, **dadurch gekennzeichnet, dass** kein Punkt einer Unterseite des kreisringförmigen ersten Bereichs bei einer Temperatur des Kochgefäßes von mehr als 100°C, 120°C, 150°C, 200°C oder 250°C um mehr als 1 mm, 0,5 mm, 0,3 mm, 0,2 mm oder 0,1 mm von der Auflageebene beabstandet ist.

12. Wärmeleitplatte nach einem der vorhergehenden Ansprüche, **dadurch gekennzeichnet, dass** die Wärmeleitplatte geprägt ist.

13. Kochgefäß (10, 12, 14, 16, 18, 110, 112, 114) umfassend einen Boden (20, 22, 24, 26, 28, 120, 122, 124) und einen nach oben abgehenden, umlaufenden Rand (30, 32, 34, 36, 38, 130, 132, 134), wobei der Boden (20, 22, 24, 26, 28, 120, 122, 124) durch eine Wärmeleitplatte (2) nach einem der vorangehenden Ansprüche gebildet ist.

## Claims

1. Heat conduction plate (2) consisting of a plurality of metal layers, wherein two steel layers are arranged on either side of a layer that contains aluminium, comprising a first annular region (50, 52, 54, 56, 58, 150, 152, 154) that forms a flat surface, runs with an underside in a bearing plane and is designed to rest on a heating device (K) during operation;
a second annular, conical or truncated pyramid-shaped region (60, 62, 64, 66, 68, 160, 162, 164) that is encompassed by the first annular region (50, 52, 54, 56, 58, 150, 152, 154) and rises at a first gradient towards the centre; and
a third region (70, 72, 74, 76, 78, 170, 172, 174) that is encompassed by the second conical or truncated pyramid-shaped region (60, 62, 64, 66, 68, 160, 162, 164) and whose gradient towards the centre of a vessel is less at all points than the first gradient;
**characterised in that** the first, second and third regions have a constant thickness, and that a distance of the third region at the transition to the second annular region of the bearing plane at room temperature is between 0.2 mm and 0.8 mm.

2. Heat conduction plate according to claim 1, **characterised in that** the third region (70, 72, 76, 78, 170, 172, 174) following on from the second conical or truncated pyramid-shaped region (60, 62, 64, 66, 68, 160, 162, 164) towards the centre runs parallel to the bearing plane.

3. Heat conduction plate according to claim 1, **characterised in that** the third region (74) following on from the second conical or truncated pyramid-shaped region (64) towards the centre rises.

4. Heat conduction plate according to claim 1, **characterised in that** the third region following on from the second conical or truncated pyramid-shaped region towards the centre slopes downwards.

5. Heat conduction plate according to one of the claims 2 to 4, **characterised in that** the third region (70, 76, 78, 170, 172, 174) has an innermost region (80) that is level.

6. Heat conduction plate according to one of the claims 2 to 4, **characterised in that** the third region (74) encompasses an innermost region (84) that is arched upwards.

7. Heat conduction plate according to one of the claims 2 to 4, **characterised in that** the third region (72) has an innermost region (82) that is arched downwards.

8. Heat conduction plate according to one of the preceding claims, **characterised in that** the steel layers are no thicker than 0.7 mm, 0.6 mm, 0.5 mm or 0.4 mm and the layer that contains aluminium is no thicker than 2.5, 2.0, 1.5 or 1.4 mm.

9. Heat conduction plate according to one of the preceding claims, **characterised by** several metal layers, wherein one of the metal layers comprises a ferromagnetic material that has a Curie temperature between 200°C and 300°C.

10. Heat conduction plate according to one of the preceding claims, **characterised in that** an underside of the heat conduction plate has a coating containing Si.

11. Heat conduction plate according to one of the claims 5, 6 or 7, **characterised in that** at a temperature of the cooking vessel of more than 100°C, 120°C, 150°C, 200°C or 250°C, no point of the underside of the ring-shaped first region is more than 1 mm, 0.5 mm, 0.3 mm, 0.2 mm or 0.1 mm distant from the bearing plane.

12. Heat conduction plate according to one of the preceding claims, **characterised in that** the heat conduction plate is embossed.

13. Cooking vessel (10, 12, 14, 16, 18, 110, 112, 114) comprising a base (20, 22, 24, 26, 28, 120, 122, 124) and a circumferential rim (30, 32, 34, 36, 38, 130, 132, 134) leading upwards, wherein the base (20, 22, 24, 26, 28, 120, 122, 124) is formed by a heat conduction plate (2) according to one of the preceding claims.

## Revendications

1. Plaque de conduction de chaleur (2) composée d'une pluralité de couches métalliques, et deux couches en acier sont positionnées de part et d'autre d'une couche qui contient de l'aluminium, comportant une première zone annulaire (50, 52, 54, 56, 58, 150, 152, 154) qui forme une surface plate, a un dessous équipé d'un plan de soutien et est conçu pour reposer contre un dispositif chauffant (K) pendant le fonctionnement
une deuxième zone annulaire, conique ou tronquée en forme de pyramide (60, 62, 64, 66, 68, 160, 162, 164) qui est délimitée par la première zone annulaire (50, 52, 54, 56, 58, 150, 152, 154) et s'élève suivant une première pente vers le centre et
une troisième zone (70, 72, 74, 76, 78, 170, 172, 174) qui est délimitée par la deuxième zone conique ou tronquée en forme de pyramide (60, 62, 64, 66, 68, 160, 162, 164) et dont la pente vers le centre d'une cuve est inférieure en tout point à la première pente
**se caractérisant par le fait que** les première, deuxième et troisième zones ont une épaisseur constante et que la distance entre la troisième zone et la transition avec la deuxième zone annulaire du plan de soutien, à la température ambiante, se situe entre 0,2 et 0,8 mm.

2. La plaque de conduction de chaleur que décrit la revendication 1, et qui se **caractérise par le fait que** la troisième zone (70, 72, 76, 78, 170, 172, 174), qui fait suite à la deuxième zone conique ou tronquée en forme de pyramide (60, 62, 64, 66, 68, 160, 162, 164), en direction du centre, est parallèle au plan de soutien.

3. La plaque de conduction de chaleur que décrit la revendication 1, et qui se **caractérise par le fait que** la troisième zone (74), qui fait suite à la deuxième zone conique ou tronquée en forme de pyramide (64), en direction du centre, s'élève.

4. La plaque de conduction de chaleur que décrit la revendication 1, et qui se **caractérise par le fait que** la troisième zone, qui fait suite à la deuxième zone conique ou tronquée en forme de pyramide, en direction du centre, suit une pente descendante.

5. La plaque de conduction de chaleur que décrit l'une ou l'autre des revendications 2 à 4, et qui se **caractérise par le fait que** la troisième zone (70, 76, 78, 170, 172, 174) a une zone la plus intérieure (80) qui se situe à l'horizontale.

6. La plaque de conduction de chaleur que décrit l'une ou l'autre des revendications 2 à 4, et qui se **caractérise par le fait que** la troisième zone (74) comporte une zone la plus intérieure (84) qui suit un arc montant.

7. La plaque de conduction de chaleur que décrit l'une ou l'autre des revendications 2 à 4, et qui se **caractérise par le fait que** la troisième zone (72) comporte une zone la plus intérieure (82) qui suit un arc descendant.

8. La plaque de conduction de chaleur que décrit l'une ou l'autre des revendications précédentes, et qui se **caractérise par le fait que** les couches en acier ont une épaisseur maximale de 0,7, 0,6, 0,5 ou 0,4 mm et que la couche qui contient de l'aluminium a une épaisseur maximale de 2,5, 2,0, 1,5 ou 1,4 mm.

9. La plaque de conduction de chaleur que décrit l'une ou l'autre des revendications précédentes, et qui se **caractérise par** la présence de plusieurs couches métalliques, et l'une de ces couches métalliques contient un matériau ferromagnétique dont la température de Curie se situe entre 200 et 300°C.

10. La plaque de conduction de chaleur que décrit l'une ou l'autre des revendications précédentes, et qui se **caractérise par le fait que** le dessous de cette plaque de conduction de chaleur a un revêtement contenant du Si.

11. La plaque de conduction de chaleur que décrit l'une ou l'autre des revendications 5, 6 ou 7, et qui se **caractérise par le fait que** lorsqu'un récipient de cuisson atteint une température de plus de 100, 120, 150, 200 ou 250°C, aucun point se situant sous la première zone en forme d'anneau se trouve à une distance de plus de 1, 0,5, 0,3, 0,2 ou 0,1 mm du plan d'appui.

12. La plaque de conduction de chaleur que décrit l'une ou l'autre des revendications précédentes, et qui se **caractérise par le fait que** cette plaque de conduction de chaleur offre un effet gaufré.

13. Le récipient de cuisson (10, 12, 14, 16, 18, 110, 112, 114) comporte un socle (20, 22, 24, 26, 28, 120, 122, 124) et une bordure périphérique (30, 32, 34, 36, 38, 130, 132, 134) pointant vers le haut, et ce socle (20, 22, 24, 26, 28, 120, 122, 124) est constitué d'une plaque de conduction de chaleur (2) identique à celle que décrit l'une ou l'autre des revendications précédentes.
